# EUROPEAN PATENT SPECIFICATION

(11) **EP 0 352 827 B1**
(45) Date of publication and mention of the grant of the patent: **21.12.1994**
(21) Application number: 89201470.5
(22) Date of filing: 08.06.1989
(51) Int. Cl.: H04M 9/02

(54) **Intercommunicating telephone set system on bifilar line**
Fernsprechsystem mit Interkommunikation auf zweiadriger Leitung
Système de postes téléphoniques avec intercommunication sur une ligne bifilaire

(30) Priority: 26.07.1988 IT 2149588
(43) Date of publication of application: 31.01.1990
(73) Proprietor: ITALTEL TELEMATICA S.p.A., 81055 Santa Maria Capua Vetere (Caserta) (IT)
(72) Inventor: Di Chiara, Enrico, I-81100 Caserta (IT); Esposito, Antonio, I-80040 Volla (NA) (IT); Pincivalle, Michele, I-81055 S. Maria Capua Vetere (CE) (IT)
(74) Representative: Giustini, Delio

(56) References cited:
- WO-A-86/06570
- WO-A-87/04312
- FR-A- 2 600 849
- GB-A- 2 157 920

## Description

This invention refers to a communication system for a plurality of telephone sets on bifilar line, such a system being capable to allow calls among the telephone sets of the system and/or between one telephone set of the system and whichever telephone set which could be reached through an external telephone line.

Communication systems of this type are known, which consist of a set of special telephone sets supplied with keys and signals allowing to communicate both among the telephone sets of the plant (internal switching) and among the telephone sets of the plant and telephone sets which could be reached through one or more external telephone lines (external calls).

It must be kept in mind that these plants have a configuration which can be compared to the Private Branch Exchange configuration, since they consist of a special equipment to which the external line(s) and a number of internal ones are abutted, according to a "star" disposition. Telephone sets are connected to internal lines in the same number, and they can communicate among them or with the telephone sets which can be reached by means of said external line, through said special equipment where all internal telephone lines converge.

It must also be considered that the need to perform an intercommunicating plant, generally rises after the realization of a plant of the "serial type" which, as already known, is made of a number of telephone sets with serial connection, which cannot comunicate among them but can communicate with the telephone sets which can be reached through an external line or externally connected segment. When a growth of user's is recorded in a standard "serial type" plant, the utilization of the currently used solutions in the intercommunicating plants of the known type involves the overcoming of plant problems, since it is necessary to transform the serial type plant into a "star" configure plant. The intercommunicating plants of the known type result being expensive and exhibit the above mentioned convertibility problems.

WO-A 8 606 570 discloses a communication system for a plurality of telephone sets associated with a single pair of telephone wires, said telephone wires having an externally connected segment and an in-house segment separated by a line interface, and further comprising an adapter module associated with each telephone set. The adapter modules of the disclosed system are connected in parallel to the in-house segment. Such arrangement has the following drawbacks.

The adapter modules are kept on line even under emergency conditions, with an undesired drawing of power. Further the networking is more complex because the connections between any telephone set and the in-house segment may become relatively long. Finally in some countries a parallel arrangement of the telephone set is not allowed, so that such prior art solution could not be used.

The aim of the present invention is the realization of a plant suitable to allow to transform a standard plant of the "serial type" into an intercommunicating plant, without any modification to lines disposition and employing at the same time a particularly simple and cheap circuit.

The present invention therefore consists of a communication system for a plurality of telephone sets associated with a single pair of telephone wires, said telephone wires having an externally connected segment and an in-house segment separated by a line interface or master circuit, said system further comprising an adapter module associated with each telephone set, characterized by the fact that said adapter modules comprise slave circuits that are connected in cascade to each other and to said in-house segment, and by the fact that said master circuit comprises:
- one master microprocessor;
- a first current generator capable to supply two of said telephone sets at least;
- a second current generator driven by said master microprocessor and adapted to send signal/call tones along the in-house segment;
- a third current generator adapted to send a frequency F along the in-house segment, upon the reception of an enabling/modulation signal emitted by the master microprocessor.

Further features of the invention will become evident from the following description relating to a non-limiting embodiment illustrated with reference to the attached drawings in which:
- figure 1 shows the block diagram of a communication telephone system according to the invention;
- figure 2 shows in detail the components of the master circuit CM shown in fig. 1;
- figure 3 shows in detail the components forming each slave circuit CS shown in figure 1;
- figure 4 shows some waveforms relevant to figure 3. Figure 1 shows the block diagram of a plant according to the invention including a master circuit CM, to which the external telephone line or externally connected segment 1 is abutted, and a number of slave circuits CS₁,..., CSᵢ which result being connected to the master circuit by an internal telephone line or in-house segment li.

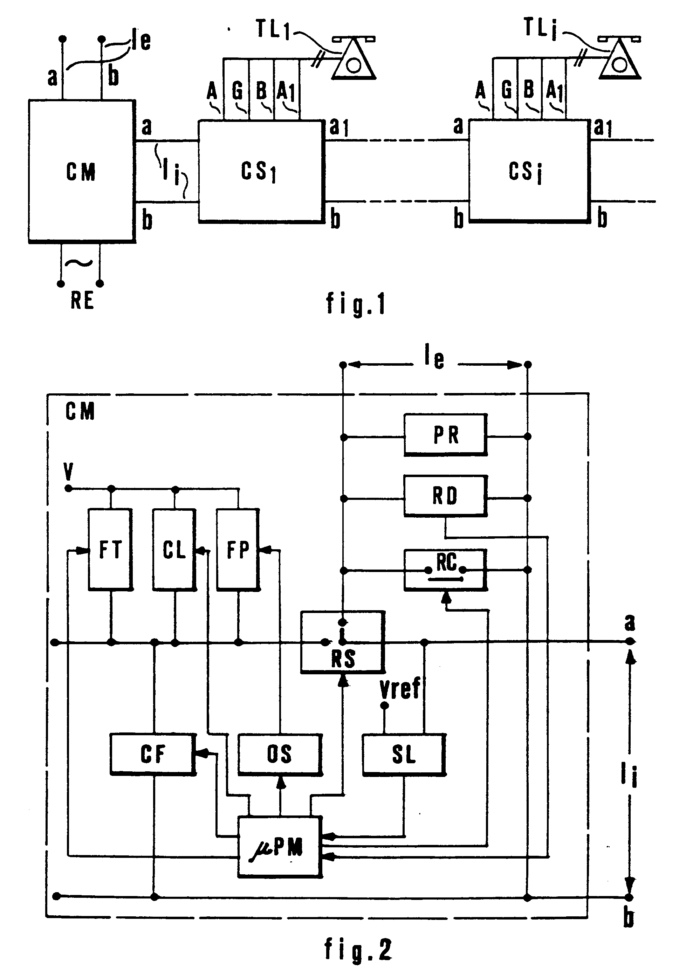

According to a preferred embodiment, slave circuits are characterized by a single figure code and consequently, being figures 0 and 1 destined to the functions described below, slave units can amount to 8 units as a maximum. In this way it is possible to realize an intercommunicating plant including a maximum number of 8 telephone sets TL₁... TL₈.

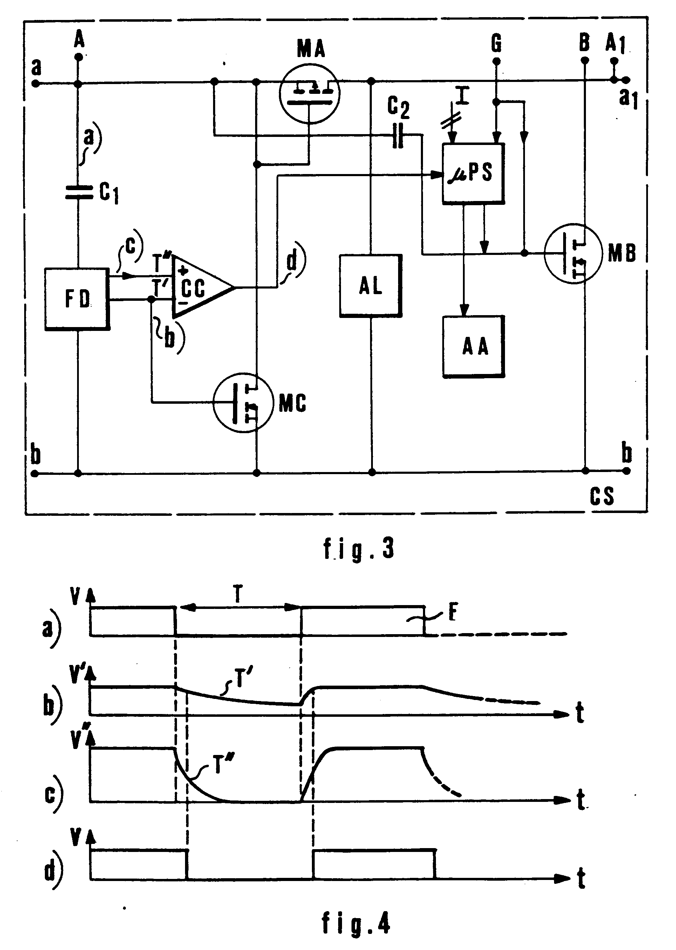

The master circuit CM is supplied by the electric power distribution network RE while slave circuits receive an enabling to supply control emitted by the master circuit as detailed in the report under figure 3.

When the mains voltage is on, operations take place under the master circuit CM control, and particularly in/out external operations, and internal communications take place according to a priority which is a function of the code 2, 3, ...,9 assigned to each single telephone set.

When the connection is made, it is not possible of course that a telephone set TL having higher priority replaces a lesser priority telephone set.

In particular the call procedure from inside towards the outside is made according to the following:
- the calling party unhooks the handset and dials 0 (or in some cases he presses a key) after receiving the line answering tone (if the internal line was already busy for an internal in-call the tone is not received but the emission of a signal by the acoustic warning device AA of figure 3 is recorded;
- once the external line answering tone is obtained, the calling party dials the number;
- the internal/external link stops when the calling party hooks the handset.

Always with the mains voltage on, calls between two telephone sets TL along the internal line lᵢ take place according to the following:
- the calling party unhooks the handset and dials 1 (or presses a special key) after receving the internal line answering tone;
- once the tone is obtained he dials the code of the telephone set he wants to reach and the link is then made and cut according to the usual practices.

On receiving an incoming call, all telephone sets ring: after answering by one of the users, in case the call is not addressed to him, the user shall:
- dial 1
- after obtaining the internal line answering tone, he dials the code of the telephone set to which he wants to tranfer the call;
- once the required link is obtained, the transfer operation is made by hooking the handset;
- in case the called user does not answer, the user can pick up the external line dialling 0.

Figure 2 shows in detail the master circuit CM which is configured in such a way to include:
- a protection circuit PR, connected in parallel to the external line lₑ, suitable to protect the plant against possible overvoltages due to malfunction and/or weather conditions;
- a call signal detector RD, suitable to make available an outgoing predetermined logic level answering to the reception of a call signal;
- a first relay RC suitable to shortcircuit the external line lₑ;
- a second relay RS suitable to connect the internal line lᵢ to the external line lₑ, or to the supply circuits foreseen in the master circuit CM;
- a line current CL generator, suitable to make available an outgoing supply current sufficient to the operation of two telephone sets (internal call);
- a tone generator FT, suitable to make available an outgoing number of acoustic tones;
- an oscillator OS suitable to generate a 75 KHz frequency F;
- a pulse generator FP which has the function to send said frequency F on the internal line lᵢ or to modulate this frequency in such a way to realize a data transmission e.g. according to a transmission procedure of asynchronous type (e.g. bit 0, 75KHz frequency absent for a time interval T, bit 1, 75KHz frequency present for said time interval T, as shown on diagram a) of figure 4);
- an hypothetical reference load CF suitable to simulate a load present on the line when the master circuit CM has to start a procedure with slave circuits CS all in rest condition;
- a sensor of the line state SL suitable to detect the line state and make available the outgoing information "line free state" or "line busy";
- one master microprocessor µPM suitable to receive at the input, the outputs of said sensor SL and of said detector RD, as well as to drive the hypothetical load CF, the first and the second relays RC and RS, the line current generator CL, the tone generator FT and the modulated pulse generator FP with the oscillations generated by the OS unit.

Figure 3 shows in detail a general slave circuit CS which is configured in such a way to include:
- a frequency detector FD which results being connected in parallel to wires a and b of the internal line lᵢ (through a first condenser C₁ suitable to cut the supply direct current) and adequate to make available on a first output a first signal having level V′ (see diagram b) of figure 4) and on a second output a second signal having level V˝ > V′ (see diagram c) of figure 4) answering to the receipt of said frequency F (according to a preferential realization shape V′ = V˝/2). The first output, or the second one, is activated for a time interval T′, or T˝, when the receipt of said frequency F stops, where T˝ << T′;
- a first switch made of a transistor MA of MOS type whose drain and source electrodes are connected in series to wire a of said internal telephone line lᵢ and whose gate electrode is connected to the first output of the frequency detector FD by means of a further transistor of MOS MC type;
- a feeder AL which is connected to the drain electrode of said MOS MA and therefore receives the line current generated by said unit CL, when detector FD activates the first output further to the receipt of said frequency F;
- a comparator circuit CC connected to the first and second outputs of said detector system FD which decodes data/controls emitted by the master circuit CM according to the methods shown in diagram d) of figure 4. In particular, when frequency F is present and signal V˝ is higher than V′, the unit CC makes available an output high logic level: when due to said time constant T˝ << T′ signal V˝ results lower than V′, unit CC makes available an output low logic level, thus making available an output signal which follows (with a brief delay) the envelope of the modulate signal emitted by the master circuit CM;
- a slave microprocessor µPS receiving at the input the output of said comparator CC, a signal G giving the status of the switching hook and a binary configuration I expressing the code of the telephone set associated to the subject slave circuit;
- an acoustic warning signal AA destined to be activated by said microprocessor µPS;
- a second switch consisting of a transistor MB of MOS type, controlled on the gate electrode by the microprocessor µPS output and presenting as well the source and drain electrode connected in series respectively to the wire which connects a call terminal of the telephone set to the second wire b forming said internal line lᵢ. The gate electrode of said MOS transistor MB receives also at the input said signal G and it results being furthermore connected to wire a of the internal line lᵢ through a condenser C₂.

It must be kept in mind that, in figure 2, relays RC and RS are shown in OFF condition, corresponding to the condition occurring when the mains voltage RE is absent.

In this condition the external line lₑ is connected to the internal line lᵢ and therefore the plant operates as a standard plant of serial type.

When the mains voltage is present, in rest position relay RS gets the state ON (internal line connected to the master circuit CM) while the relay RC gets the OFF state (external line not in shortcircuit).

The line current generator CL results active in order to make available at the output the supply current of slave circuits CS. The master circuit µPM microprocessor results being in loop to detect:
- the activation of the output of said detector RD (reception of call signal);
- the activation of the output of the line sensor SL to detect the possible engagement of the line by one of the telephone sets TL.

When a user unhooks the handset, this event is detected by the relevant µPS unit by means of said signal G and a lowering of line voltage is recorded, being signalled by the microprocessor foreseen in the master circuit through the line sensor SL.

The µPM unit, further to this event, activates the tone generator FT which sends the tone "internal line free" on the internal line lᵢ and goes in loop waiting to detect the numbers dialled by the user (always through the line sensor SL which identifies the opening-closure of the line operated by the rotary dial/keyboard).

If the user dials 0, the µPM unit starts the procedure foreseen for an outgoing call, while in case the user dials 1, the µPM unit starts the extension-extension call procedure.

Considering that according to a preferential realization form both the procedures start with the identification of the calling party, the µPM unit determines that frequency F is sent on the internal line lᵢ. Since the sending of this frequency involves the disengagement of the calling telephone set from the line (to allow identification), the µPM unit determines the insertion of the hypothetical load CF and then drives the unit FP in such a way as to send on the internal line lᵢ a binary configuration expressing a "scanning" control and a binary configuration expressing the slave circuit CS code, concerned in the scanning operation of the moment considered.

The emission of frequency F by unit FP is detected by circuits FD foreseen in the slave units, which activate said first output determining the closure of said first switch MA through unit MC.

This current from the generator CL feeds the feeders AL in slave circuits CS through the internal line lᵢ so that the components in the slave circuit CS are fed without a local supply source: µPS units, through the data transmission channel consisting of the internal line lᵢ and of units FD and CC, receive said scanning control as well as the slave circuit CS code concerned in the scanning operation on the moment considered. The calling unit CS, when it detects the presence of a code corresponding to the one assigned to itself, determines the closure of the second switch MB (through the relevant µPS unit) and gets the state of "calling slave". The microprocessor of the master unit µPM, after emitting said scanning control, disconnects the dummy load CF from the internal line lᵢ and checks if this latter is busy (MB switch closed). If the check is successful, the µPM unit sends a "identified calling party" control which is detected by all microprocessors µPS of units CS not involved in the above mentioned operations.

If the user dialled 0 to make a direct call on the external line, the master circuit CM, after identification of the calling slave as detailed above, determines:
- the stop of frequency F emission;
- the switching to OFF state of relays RS and RC;
- a check on the line state.

In case the user dialled 1 to make an internal call, after the identification of the calling user on the basis of the above mentioned procedure, the state of the switches of all circuits CS is the following:
- the first switch MA of all slave circuits is closed;
- the second switch MB of all slave circuits is open except for the calling slave circuit which is closed.

The µPM unit controls the emission of the "free internal line" tone of generator FT, the tone being received only by the calling slave circuit through the switch MB. After receipt of the above mentioned tone, the user dials the code of the user he wants to call, and this code is detected by unit µPM through the line sensor SL. The µPM unit emits on the internal line lᵢ an "internal call" control as well as the code of the user called. This one, after receipt of said control, operates the relevant acoustic warning device AA, determines the closure of switch MB and waits to detect the handset unhooking, checking the state of said input G. The call takes place according to the usual procedures and the link is cut when the µPM unit detects the disengagement of the line throuch unit SL.

Finally, in case of a call from outside, in the initial state all slave circuits CS are not fed when on hook.

The µPM unit is in waiting loop and scans by cycles the call detector RD. When the unit RD activates its own output, the µPM unit connects the hypothetical load CF to the internal line lᵢ and activates the generator FP to send said frequency F on the internal line lᵢ thus enabling feeders AL of slave circuits CS. Then it emits the "incoming call" control addressed to all circuits CS.

Microprocessors µPS of all circuits CS activate the relevant acoustic warning device AA and wait to detect the operation of the relevant switching hook G. When one of the µPS units detects this condition, it determines the closure of switch MB (line busy) and this operation is highlighted by the master circuit CM through said line sensor SL.

Further to this event, the µPM unit:
- deactivates said pulse generator FP;
- determines the closure of relay RC;
- de-energizes relay RS (external line connected to the internal one);
- opens relay RC, thus enabling the starting of switching which takes place in the usual way (relay RC is closed and then open to avoid dangerous counterpolarizations between the internal line - fixed polarity - and external line - non fixed polarity).

In case the call was not addressed to the user who unhooked the handset, it is foreseen a call transfer procedure to the final user, foreseeing the dialling - by the subject slave - of figure 1. The µPM unit (after identification of figure 1) determines the closure of relay RC and controls the switching of relay RS connecting the internal line lᵢ to supply circuits.

Then it activates the current generator CL, sends the free internal line tone and waits for the user selecting the code of the final user.

When this last event occurs, the µPM unit analyzes the code dialled and emits a "transfer" control addressed to the slave circuit CS corresponding to the identified code.

The so identified slave circuit CS operates the acoustic signal AA and the call goes on in the usual way.

In the light of the above it is clear that the system according to the invention completely meets the requirements stated in the object, since it gives the possibility to modify a plant of serial type into a plant of the intercommunicating type without the need of any modification of lines disposition.

## Claims

1. A communication system for a plurality of telephone sets (TLⱼ) associated with a single pair of telephone wires, said telephone wires having an externally connected segment (lₑ) and an in-house segment (lᵢ) separated by a line interface or master circuit (CM), said system further comprising an adapter module (CSⱼ) associated with each telephone set (TL),
characterized by the fact that said adapter modules comprise slave circuits (CSⱼ) that are connected in cascade to each other and to said in-house segment (lᵢ), and by the fact that said master circuit (CM) comprises:
- one master microprocessor (µPM);
- a first current generator (CL) capable to supply two of said telephone sets (TL) at least;
- a second current generator (FT) driven by said master microprocessor (µPM) and adapted to send signal/call tones along the in-house segment (lᵢ);
- a third current generator (FP) adapted to send a frequency F along the in-house segment (lᵢ), upon the reception of an enabling/modulation signal emitted by the master microprocessor (µPM).

2. A communication system as claimed in claim 1, characterized by the fact that said master circuit (CM) further comprises:
- one call signal detector (RD) the output of which is connected to the master microprocessor (µPM);
- a first relay (RC) driven by said master microprocessor (µPM) to shortcircuit said externally connected segment (lₑ);
- a second relay (RS) driven by said master microprocessor (µPM) to connect the in-house segment (lᵢ) either with the externally connected segment (lₑ) or with the master circuit (CM);
- one sensor of the line state (SL) for supplying to the master microprocessor (µPM) information about the state (free or busy) of said in-house segment (lᵢ);
- a dummy load (CF) driven by said master microprocessor (µPM) for simulating the presence of a load across the in-house segment (lᵢ).

3. A communication system as claimed in claim 1, characterized by the fact that each slave circuit (CS) comprises:
- a slave microprocessor (µPs) which receives as an input a hook signal (G) as well as a code (I) of the associated telephone set (TL);
- a detector (FD) of said frequency F which is connected to the wires (a and b) of said in-house segment and outputs on a first output a first level signal V′ and on a second output a second level signal V˝ > V′ in response to the reception of said frequency F, the first signal - or the second one - remaining active for a time T′ or for a time T˝ << T′ after the reception of said frequency F stops;
- a first switch (MA), in series with one (a) of the wires forming the in-house segment (lᵢ), which is controlled by said first output of the detector circuit (FD);
- a feeder (AL) connected downstream the first switch between the wires (a,b) of said in-house segment (lᵢ);
- a data detector (CC) the inverting input (or the non inverting input) of which is connected to the first and second outputs of the , respectively, the output of said data detector (CC) being connected to the slave microprocessor (µPS);
- a second switch (MB) for connecting a telephone set call terminal to the other wire (b) of said in-house segment (lᵢ), which is controlled by said microprocessor (µPS), by the hook signal (G) supplied by the associated telephone set and by the call signal through a condenser (C₂);
- an acoustic warning device (AA) controlled by the slave microprocessor (µPS).

4. A communication system as claimed in the preceding claims, characterized by the fact that said master microprocessor (µPM) performs a transmission of data/control signals to the slave circuits (CSⱼ) which either cause or stop the emission of said frequency F in presence of one polarity of the bits to be transmitted, or of the opposed polarity thereof, with the period T of each bit being equal to T < T′.

5. A communication system as claimed in claim 3, characterized by the fact that said first switch (MA) is controlled by the first output of said frequency detector (FD) through a third switch (MC).

6. A communication system as claimed in claims 3 and 5, characterized by the fact that each of said first, second and third switches (MA, MB, MC) comprises MOS transistors.

7. A communication system as claimed in claim 3, characterized by the fact that said first level signal V′ has a level equal to V˝/2.

## Patentansprüche

1. Kommunikationssystem für eine Mehrzahl von Telefonapparaten (TLj), die durch ein einfaches Paar von Telefondrähten verbunden sind, wobei die genannten Telefondrähte über eine extern verbundene Telefonleitung (lₑ) und eine interne Telefonleitung (lᵢ) verfügen, welche durch ein Leitungs-Interface oder eine Master-Schaltung (CM) getrennt sind, und das genannte System schließt weiter ein Anpassungsmodul (CSⱼ) ein, das mit jedem Telefonapparat verbunden ist, und ist gekennzeichnet durch die Tatsache, daß die genannten Anpassungsmudule Nebenmodule (CSⱼ) einschließen, die kaskadenartig mit einander und mit dem genannten internen Segment (lᵢ) verbunden sind, sowie durch die Tatsache, daß die genannte Masterschaltung (CM) folgendes einschließt:
- einen Master-Mikroprozessor (µPM);
- einen ersten Stromgenerator (CL), der geeignet ist, mindestens zwei der genannten Telefonapparate (TL) zu versorgen;
- einen zweiten Stromgenerator (FT), der durch den genannten Mikroprozessor (µPM) gesteuert wird und geeignet ist, Signal/Ruftöne über das interne Segment (lᵢ) zu senden;
- einen dritten Stromgenerator (FP), der geeignet ist, nach Empfang eines durch den Master-Mikroprozessor (µPM) gesendeten Steuer/Modulationssignals eine Frequenz F über das interne Segment (lᵢ) zu übermitteln.

2. Kommunikationssystem entsprechen Anspruch 1, dadurch gekennzeichnet, daß die genannte Master-Schaltung (CM) weiter folgendes einschließt:
- einen Rufsignaldetektor (RD), dessen ausgang mit dem Hauptmikroprozessor (µPM) verbunden ist;
- ein erstes Relais (RC), das durch den genannten Hauptmikroprozessor (µPM) zwecks Kurzschaltung des genannten extern verbundenen Segments (lₑ) gesteuert wird;
- ein zweites Relais (RS), das durch den genannten Hauptmikroprozessor (µPM) gesteuert wird, um das interne Segment (lᵢ) entweder mit dem extern verbundenen Segment (lₑ) oder mit der Hauptschaltung (CM) zu verbinden;
- einen Leitungszustandssensor (SL) zur Vermittlung von Information über den Zustand (frei oder besetzt) des genannten internen Segments (lᵢ) an den Hauptmikroprozessor (µPM);
- eine künstliche Belastung (CF), die durch den genannten Hauptmikroprozessor (µPM) zwecks Simulation des Vorhandenseins einer Last innerhalb des internen Segments (lᵢ) gesteuert wird.

3. Kommunikationssystem entsprechend Anspruch 1, dadurch gekennzeichnet, daß jede Nebenschaltung (CS) folgendes einschließt:
- einen Nebenmikroprozessor (µPS), der an einem Eingang ein Hakensignal (G) sowie eine Kodierung (I) des verbundenen Telefonapparats (TL) empfängt;
- einen Detektor (FD) für die genannte Frequenz F, die mit den Drähten (a und b) des genannten internen Segments und die auf einen ersten Ausgang ein erstes Niveausignal V′ und auf einem zweiten Ausgang ein Niveausignal V˝ > V′ als Reaktion auf den Empfang der genannten Frequenz F ausgibt, wobei das erste Signal - oder das zweite - für eine Zeitdauer T′ oder T˝ << T′, nachdem der Empfang der genannten Frequenz F endet, aktiv bleibt;
- einen ersten Schalter (MA) in Serie zu einem (a) der Drähte, die das interne Segment (lᵢ) bilden, welches durch den genannten ersten Ausgang der Detektorschaltung (FD) gesteuert wird;
- eine Stromversorgung (AL), die stromabwärts des ersten Schalters zwischen des Drähten (a, b) des genannten internen Segments (lᵢ) gekoppelt ist;
- einen Datendetektor (CC), dessen umkehrender Eingang (oder nicht umkehrender Eingang) mit dem ersten beziehungsweise zweiten Ausgang verbunden ist, wobei der Ausgang des genannten Datendetektors (CC) mit dem Nebenmikroprozessor (µPS) verbunden ist;
- einen zweiten Schalter (MB) zur Verbindung des Hörers eines Telefonapparates mit dem anderen Draht (b) des genannten internen Segments (lᵢ), das durch den genannten Mikroprozessor (µPS), das durch den verbundenen Telefonapparat erzeugte Hakensignal (G) und durch das Rufsignal durch einen Kondensator (C₂) gesteuert wird;
- eine akkustische Warnvorrichtung (AA), die durch einen Nebenmikroprozessor (µPS) gesteuert wird.

4. Kommunikationssystem entsprechend den vorstehenden Ansprüchen, dadurch gekennzeichnet, daß der genannte Hauptmikroprozessor (µPM) eine Übertragung von Daten/Steuersignalen zu den Nebenschaltungen (CSⱼ) durchführt, was entweder das Senden der genannten Frequenz F bei Vorhandensein einer Polarität der zu übertragenden Bits oder deren gegensätzlichen Polarität hervorruft oder beendet, wobei die Periode T jedes Bits gleich T < T′ ist.

5. Kommunikationssystem wie unter 3, dadurch gekennzeichnet, daß der genannte erste Schalter (MA) durch den ersten Ausgang des genannten Frequenzdetektors (FD) mittels eines dritten Schalters (MC) gesteuert wird.

6. Kommunikationssystem wie unter 3 und 5, dadurch gekennzeichnet, das jeder Schalter 1, 2 und 3 (MA, MB, MC) MOS Transistoren einschließt.

7. Kommunikationssystem wie unter 3, dadurch gekennzeichnet, daß das genannte erste Niveausignal V′ ein Niveau gleich V˝/2 hat.

## Revendications

1. Système de communication pour une pluralité de postes téléphoniques (TLⱼ) associés par une simple pair de fils téléphoniques, les dits fils téléphoniques ayant un segment externe (lₑ) et un segment interne (lᵢ) séparées par une interface de ligne ou un circuit principal (CM), le dit système comprend en outre un module intermédiaire (CSⱼ) connecté avec chaque poste téléphonique (TL),
caractérisé en ce que les dits modules intermédiaires comprennent des circuits secondaire (CSⱼ) reliés en cascade l'un à l'autre et au segment interne (lᵢ) et par le fait que le dit circuit principal (CM) comprend:
- un microprocesseur principal (µPM);
- un premier générateur de courant (CL) apte à alimenter au moins deux des dits postes téléphoniques (TL);
- un deuxième générateur de courant (FT) piloté par le dit microprocesseur principal (µPM) et apte à émettre des signaux d'appel le long du segment interne (lᵢ);
- un troisième générateur de courant (FP) apte à envoyer une fréquence F le long du segment interne (lᵢ) en réponse à la réception d'un signal habilitant/ de modulation émis par le microprocesseur principal (µPM).

2. Système de communication comme sous 1, caractérisé en ce que le dit circuit principal (CM) comprend en outre:
- un détecteur de signal d'appel (RD) dont la sortie est reliée au microprocesseur principal (µPM);
- un premier relais (RC) piloté par le dit microprocesseur principal (µPM) pour court-circuiter le dit segment externe (lₑ);
- un deuxième relais (RS) piloté par le dit microprocesseur principal (µPM) pour relier le segment interne (lᵢ) ou avec le segment externe (lₑ) ou avec le circuit principal (CM);
- un rélévateur de condition de ligne (SL) pour donner au microprocesseur principal (µPM) des informations sur la condition (libre ou occupée) du dit segment interne (lᵢ);
- une charge fictive (CF) pilotée par le dit microprocesseur principal (µPM) pour simuler la présence d'une charge sur le segment interne (lᵢ).

3. Système de communication comme sous 1., caractérisé en ce que chaque circuit relais (CS) comprend:
- un microprocesseur secondaire (µPS) recevant en entrée un signal crochet (G) et un code (I) du poste téléphonique connecté (TL);
- un détecteur (FD) de la dite fréquence (F) connecté aux fils (a et b) de la dite ligne téléphonique interne et qui rend un premier signal de niveau V′ disponible sur une première sortie et sur une deuxième sortie un deuxième signal de niveau V˝ > V′ en réponse à la réception de la dite fréquence F, le premier signal - ou le deuxième - restant activé pour un période T′ ou T˝, après que la réception de la dite fréquence F s'arrête;
- un premier interrupteur (MA) mis en série avec un (a) des fils, qui constituent le segment interne (lᵢ) étant contrôlée par la dite première sortie du circuit détecteur (FD);
- une ligne d'alimentation (AL) connectée en aval du premier interrupteur;
- un révélateur de dates (CC) dont l'entrée inverseur (ou non inverseur) est connectée respectivement à la première et la deuxième sortie du dit révélateur de fréquence (FD), et la sortie du dit révélateur de dates (CC) étant connectée au microprocesseur secondaire (µPS);
- un deuxième interrupteur (MB) pour connecter un raccord d'appel du poste téléphonique à l'autre fil (b) du segment interne (lᵢ), qui est contrôlé par le dit microprocesseur (µPS), par le signal crochet (G) procuré par le poste téléphonique connecté et par le signal d'appel à travers un condensateur (C₂);
- un dispositif d'avertissement acoustique (AA) contrôlé par le microprocesseur secondaire (µPS).

4. Système de communication comme aux revendications précédentes, caractérisé en ce que le dit microprocesseur principal (µPM) effectue une transmission de signaux de dates/ commandes en direction des circuits secondaires (CSⱼ), ce qui cause ou arrête l'émission de la dite fréquence F en présence d'une polarité ou de la polarité opposée des bits à transmettre, la période T de chaque bit étant égal à T < T′.

5. Système de communication comme sous 3, caractérisé en ce que le dit premier interrupteur (MA) est contrôlé par la première sortie du dit révélateur de fréquence (FD) à travers un troisième interrupteur (MC).

6. Système de communication comme sous 3 et 5, caractérisé en ce que le premier, deuxième et troisième interrupteur (MA, MB, MC) comprennent des transistors MOS.

7. Système comme sous 3, caractérisé en ce que le dit premier signal V′ a un niveau égal à V˝/2.
